# EUROPÄISCHE PATENTANMELDUNG

(11) **EP 1 865 616 A2**
(43) Veröffentlichungstag der Anmeldung: **12.12.2007**
(21) Anmeldenummer: 07004985.3
(22) Anmeldetag: 10.03.2007
(51) Int. Cl.: H04B 3/54

(54) **Elektrisches/elektronisches Bussgerät**

(30) Priorität: 08.06.2006 DE 10626582
(71) Anmelder: INSTA ELEKTRO GmbH, 58511 Lüdenscheid (DE)
(72) Erfinder: Hüttenschmidt, Eberhard, Dipl.-Ing., 58553 Halver (DE); Donat, Norbert, 58553 Halver (DE)

(57) **Zusammenfassung**

Es wird ein elektrisches/elektronisches Busgerät zum übertragerlosen Anschluss an ein Zweidrahtbussystem der Gebäudesystemtechnik vorgeschlagen, welches einen Busankoppler aufweist, der eine Empfangsstufe sowie eine Sendestufe beinhaltet und außerdem mit einer Stromversorgungseinheit ausgerüstet ist. Zu dem Zweck, ein elektrisches/elektronisches Busgerät zu schaffen, ein übertragerloses Busgerät zu schaffen, welches besonders einfach und kostengünstig aufgebaut ist und sich vergleichsweise einfach herstellen lässt, sind der Eingang der Empfangsstufe, der Ausgangs der Sendestufe und der Eingang der Stromversorgungseinheit jeweils mit einer hohen Impedanz versehen.

## Beschreibung

Die vorliegende Erfindung geht von einem gemäß Oberbegriff des Hauptanspruches konzipierten elektrischen/elektronischen Busgerät aus.

Derartige Busgeräte sind dafür vorgesehen, die vielschichtigen technischen Anforderungen der Gebäudesystemtechnik zu erfüllen. Über das Zweidrahtbussystem sind alle Busgeräte miteinander vernetzt und können miteinander kommunizieren. Sensoren wie Taster, Schalter, Fensterkontakte usw. erfassen Ereignisse oder physikalische Größen wie Helligkeit, Temperatur, Wind usw. und beeinflussen bedarfsgerecht über Aktoren z. B. Beleuchtungseinrichtungen, Jalousien, Heizungen, Anzeigevorrichtungen und Statusanzeigen.

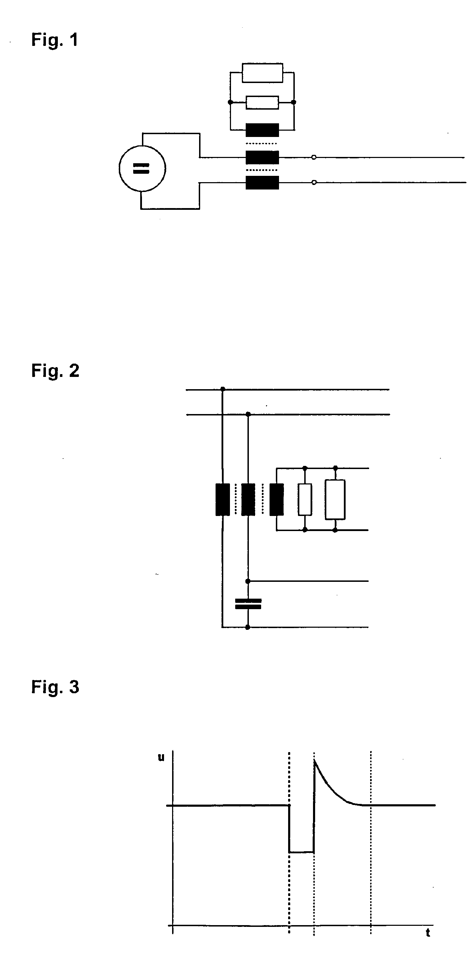

In solchen Zweidrahtbussystemen der Gebäudesystemtechnik dient die zweiadrige Busleitung sowohl der Energieversorgung der angeschlossenen Busgeräte als auch der Datenübertragung. Im Ruhezustand führt die zweiadrige Busleitung eine Gleichspannung, die durch eine zentrale Energieversorgung über eine Drossel in die zweiadrige Busleitung eingespeist wird. Für den kontinuierlich fließenden Gleichstrom hat die Drossel eine niedrige Impedanz, so dass über die zweiadrige Busleitung genügend Energie für die angeschlossenen Busgeräte bzw. Busteilnehmer bereitgestellt wird. Für Datensignale, die in die Busspannung eingeprägt werden, hat die Drossel dagegen eine hohe Impedanz. Für den Leitungsabschluss am Energieeinspeisepunkt sorgt ein Abschlusswiderstand, der parallel zur Drossel geschaltet ist. Zur Kompensation des Magnetisierungsstromes ist außerdem eine Kompensationsschaltung parallel zur Drossel angeordnet. Ein vereinfachtes Schaltbild ist in Figur 1 dargestellt.

Die Daten setzen sich aus aktiven und passiven Bits zusammen. Der Ruhezustand der Busleitung entspricht dabei dem passiven Bit. Beim aktiven Bit wird die Busspannung während der aktiven Phase des aktiven Bits durch die Sendeschaltung um die Datenspannung verringert. Im Verlauf der darauf folgenden Ausgleichsphase schwingt die Busspannung wieder auf den Ruhezustand der Busleitung ein. Während der aktiven Phase baut sich in der Einspeisedrossel Magnetisierungsenergie auf, die während der Ausgleichsphase wieder abgegeben wird. Der Verlauf der Busspannung während eines aktiven Bits ist in Figur 3 dargestellt.

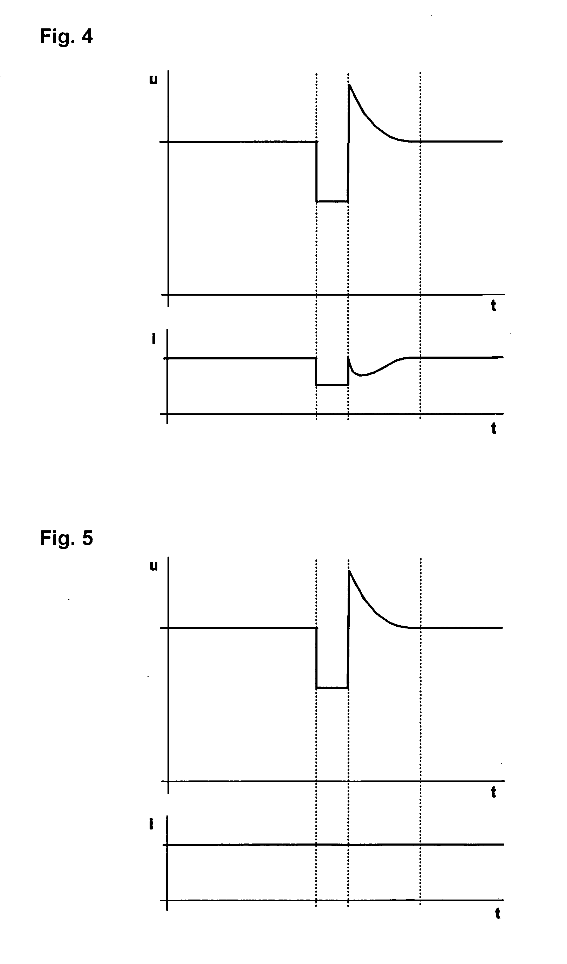

Aus der EP 0 365 696 ist ein Busgerät mit Übertrager bekannt geworden, welcher an eine zweiadrige Busleitung angekoppelt werden kann. Die Energieversorgung dieses Busgerätes erfolgt in diesem Fall aus der vorliegenden Gleichspannung des Zweidrahtbussystem über die niedrige Impedanz der Übertragerwicklung. Für die Datenimpulse der Datenübertragung hat der Übertrager eine hohe Impedanz, die zum Zweck des anteiligen Leitungsabschlusses mit einem Abschlusswiderstand überbrückt ist. Ferner ist parallel zur Übertragerwicklung eine Schaltung zur Kompensierung des Magnetisierungsstromes angeordnet, der sich während der aktiven Phase des Datensignals aufbaut und der sich während der Ausgleichsphase wieder abbaut. Ein vereinfachtes Schaltbild ist in Figur 2 dargestellt. Dadurch ergibt sich während der Übertragung der aktiven Phase des aktiven Bits eine nahezu rechteckförmige Änderung der Stromaufnahme, wie aus Figur 4 hervorgeht. Ein solcher Übertrager benötigt jedoch relativ viel Platz und ist außerdem relativ schwer, weshalb die Herstellung eines Busgerätes mit Übertrager vergleichsweise aufwendig ist.

Des weiteren ist durch die EP 0 854 587 B1 ein dem Oberbegriff des Hauptanspruches entsprechendes elektrisches/elektronisches Busgerät zum übertragerlosen Anschluss an das beschriebene Zweidrahtbussystem der Gebäudesystemtechnik bekannt geworden. Dieses elektrische/elektronische Busgerät weist einen Busankoppler mit einem die Eigenschaften eines Übertragers simulierenden Schaltungsteil auf. Die Schaltungsanordnung eines derartigen elektrischen/elektronischen Busgerätes ist also derart konzipiert, dass diese während des Empfangs der aktiven Bitphase Energie aus dem Zweidrahtbussystem aufnimmt und diese während der Ausgleichsphase zumindest zum Teil wieder an das Zweidrahtbussystem abgibt. Eine solche Schaltungsanordnung ist jedoch nicht nur vergleichsweise komplex aufgebaut, sonder verursacht zu ihrer Realisierung außerdem entsprechen hohe Kosten.
Ausgehend von derart ausgebildeten elektrischen/elektronischen Busgeräten liegt der vorliegenden Erfindung die Aufgabe zugrunde, ein übertragerloses Busgerät zu schaffen, welches besonders einfach und kostengünstig aufgebaut ist und sich vergleichsweise einfach herstellen lässt.

Erfindungsgemäß wird diese Aufgabe durch die im Hauptanspruch angegebenen Merkmale gelöst.

Bei einer solchen Ausbildung ist besonders vorteilhaft, dass der Schaltungsteil, der normalerweise für die Rückspeisung der im Übertrager gespeicherten Energie in das Zweidrahtbussystem notwendig ist, komplett entfällt.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert. Dabei zeigen:
- Figur 1:: prinziphaft den Aufbau der zentralen Energieversorgung mit Drossel, Abschlusswiderstand und Kompensationsschaltung gemäß Stand der Technik;
- Figur 2:: prinziphaft ein Busgerät mit Übertrager, Abschlusswiderstand und Kompensationsschaltung gemäß Stand der Technik;
- Figur 3:: die Busspannung während der Übertragung des aktiven Bits gemäß Stand der Technik;
- Figur 4:: Busspannung und Stromaufnahme des Busankopplers während des Empfangs eines aktiven Bits gemäß Stand der Technik;
- Figur 5:: Busspannung und Stromaufnahme des Busankopplers während des Empfangs eines aktiven Bits gemäß erfindungsgemäßem Gegenstand;
- Figur 6:: prinziphaft ein an ein Zweidrahtbussystem angeschlossenes, erfindungsgemäßes Busgerät.

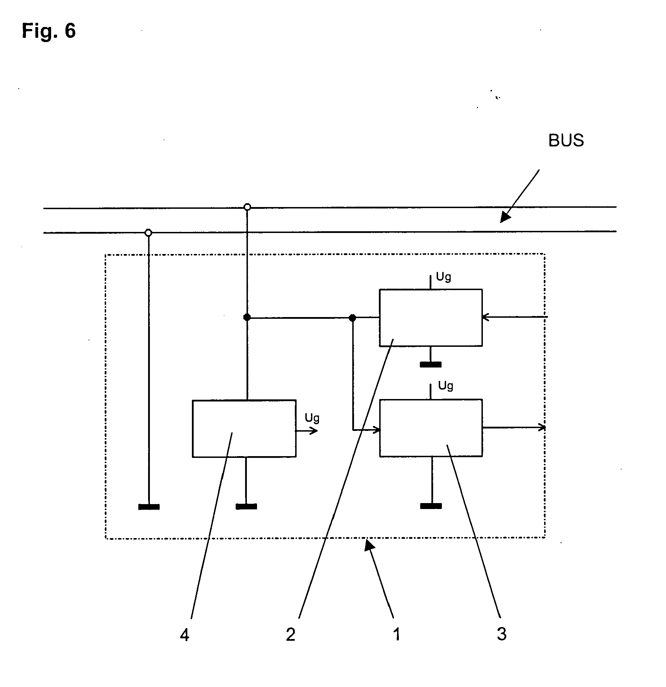

Wie insbesondere aus Figur 6 hervorgeht, weist ein erfindungsgemäß ausgebildetes, zum übertragerlosen Anschluss an ein Zweidrahtbussystem BUS der Gebäudesystemtechnik vorgesehenes Busgerät, einen Busankoppler 1 auf, welcher eine Sendestufe 2 und eine Empfangsstufe 3 beinhaltet und außerdem mit einer Stromversorgungseinheit 4 ausgerüstet ist, die dem Zweidrahtbussystem BUS einen konstanten Strom entnimmt.

Die hohe Impedanz der Empfangsstufe 3 wird beispielsweise durch die Verwendung eines Darlington-Transistors, die hohe Impedanz des Ausgangs der Sendestufe 2 durch den offenen Kollektor des Sendetransistors realisiert. Die hohe Impedanz der Stromversorgungseinheit 4 ergibt sich aus dem Einsatz einer Konstantstromquelle.

Übertragerlose Busankoppler, die dem Stand der Technik entsprechen, werden busseitig mit einem anteiligen Abschlusswiderstand versehen. Beim Anschluss vieler Busgeräte kommt die Parallelschaltung aller anteiligen Abschlusswiderstände in die Größenordnung des Wellenwiderstandes der Busleitung. Das Bussystem ist aber so konzipiert, dass auch beim Anschluss von lediglich zwei Busgeräten eine fehlerfreie Datenübertragung gewährleistet ist. Reflexionen auf einer langen Busleitung werden bei der Abtastung der aktiven Bitphase durch die Software der Busankoppler erkannt und führen zu keiner Verfälschung der übertragenen Daten. Deshalb ist es möglich, die Busgeräte auch ohne anteiligen Abschlusswiderstand aufzubauen, ohne dass es zu einer Beeinträchtigung der Übertragungseigenschaften kommt. Da die erfindungsgemäßen Busgeräte sich in Bezug auf die Datenübertragung so verhalten, als wären sie gar nicht existent, kann auch auf alle, den Übertrager simulierende Schaltungseigenschaften während des aktiven Bits verzichtet werden. Die normalerweise bei Busankopplern des Standes der Technik dafür notwendigen Schaltungsteile sind somit verzichtbar, was zu einem besonders einfach und kostengünstig aufgebauten und vergleichsweise einfach herzustellenden Busgerät führt.

Wie insbesondere aus Figur 5 hervorgeht, wird die Stromaufnahme des Busankopplers 1 beim Datenempfang während der aktiven Phase des aktiven Bits bei einem erfindungsgemäß ausgebildeten Busgerät nicht beeinflusst. Es erfolgt keine durch das aktive Bit verursachte Energieaufnahme aus dem Zweidrahtbussystem BUS. Ebenso erfolgt im Verlauf der darauf folgenden Ausgleichsphase keine Energierückspeisung, so dass die Stromaufnahme des Busankopplers 1 beim Datenempfang im Idealfall konstant bleibt.

## Patentansprüche

1. Elektrisches/elektronisches Busgerät zum übertragerlosen Anschluss an ein Zweidrahtbussystem der Gebäudesystemtechnik, welches einen Busankoppler aufweist, der eine Empfangsstufe sowie eine Sendestufe beinhaltet und außerdem mit einer Stromversorgungseinheit ausgerüstet ist, **dadurch gekennzeichnet, dass** der Eingang der Empfangsstufe (3), der Ausgangs der Sendestufe (2) und der Eingang der Stromversorgungseinheit (4) jeweils mit einer hohen Impedanz versehen sind.

2. Elektrisches/elektronisches Busgerät nach Anspruch 1, **dadurch gekennzeichnet, dass** die Stromversorgungseinheit (4) über eine Konstantstromquelle Energie aus dem Zweidrahtbussystem (BUS) entnimmt.

3. Elektrisches/elektronisches Busgerät nach Anspruch 1 oder 2, **dadurch gekennzeichnet, dass** die Energieversorgung der Empfangsstufe (3) und der Sendestufe (2) direkt über die Stromversorgungseinheit (4) erfolgt.
